# FASCICULE DE BREVET EUROPEEN

(11) **EP 3 882 102 B1**
(45) Date de publication et mention de la délivrance du brevet: **24.05.2023**
(21) Numéro de dépôt: 21163326.8
(22) Date de dépôt: 18.03.2021
(51) Int. Cl.: B61D 17/04

(54) **TRAVERSE POUR CAISSE DE VÉHICULE DE TRANSPORT PUBLIC, CAISSE ET PROCÉDÉ DE FABRICATION ASSOCIÉS**
QUERTRÄGER FÜR EINE KAROSSERIE EINES ÖFFENTLICHEN VERKEHRSMITTELS, ENTSPRECHENDE KAROSSERIE UND ENTSPRECHENDES HERSTELLUNGSVERFAHREN
CROSSMEMBER FOR BODY OF A PUBLIC TRANSPORT VEHICLE, ASSOCIATED BODY AND MANUFACTURING METHOD

(30) Priorité: 18.03.2020 FR 2002639
(43) Date de publication de la demande: 22.09.2021
(73) Titulaire: SpeedInnov, 75008 Paris (FR)
(72) Inventeur: RENAUD, Guy, 17220 SAINTE SOULLE (FR); MAILLARD, Jean-François, 17870 BREUIL MAGNE (FR); GIRAUDEAU, Dominique, 17230 VILLEDOUX (FR)
(74) Mandataire: Lavoix

(56) Documents cités:
- EP-A1- 0 544 498
- DE-A1-102016 114 241
- DE-U1-202011 004 570
- JP-A- 2010 149 849

## Description

La présente invention concerne une traverse pour caisse de véhicule de transport public, notamment de véhicule ferroviaire.

De manière classique, une caisse de véhicule de transport public, notamment de véhicule ferroviaire, comporte notamment un châssis, des faces latérales et un pavillon. Le châssis et le pavillon comportent notamment des traverses formées au moins en partie par des éléments profilés métalliques assemblés entre eux, par exemple, par soudage.

Les profilés étant généralement creux, de l'air est susceptible d'entrer à l'intérieur et de produire des sifflements désagréables pour les passagers ou pour les personnes se trouvant à proximité du véhicule, en particulier lorsque le véhicule circule à grande vitesse. De plus, des déchets végétaux (feuilles, boues) ou de l'eau sont susceptibles de pénétrer à l'intérieur des profilés et d'y générer de la corrosion.

Pour assurer l'étanchéité des profilés, il est connu de fermer ceux-ci au moyen de tôles métalliques. Les tôles sont tout d'abord découpées pour présenter une forme sensiblement complémentaire de celle de la section des profilés, puis assemblées à ces derniers par soudage. Puis, une couche de peinture anticorrosive et un mastic sont appliqués.

Un tel procédé ne donne cependant pas entière satisfaction. En effet, les différentes étapes (découpage des tôles, soudage, peinture, mastiquage) sont complexes et demandent des qualifications techniques spécifiques afin d'éviter tout défaut pouvant conduire à un défaut d'étanchéité des profilés.

Le document DE 10 2016 114241 A1 décrit une traverse pour véhicule ferroviaire comprenant un embout. Le document DE 20 2011 004570 U1 décrit une plaque à double paroi, utilisée notamment pour le vitrage des piscines, des serres ou des bâtiments industriels.

Un des buts de l'invention est donc de fournir un système assurant une bonne étanchéité des profilés de la caisse, tout en restant simple et rapide à mettre en oeuvre.

A cet effet, l'invention concerne une traverse selon la revendication 1.

L'embout assure ainsi l'étanchéité du profilé, en empêchant l'infiltration d'air, d'eau et/ou de déchets végétaux à l'intérieur du profilé. La durée de vie du profilé est ainsi allongée, et le confort des passagers est renforcé. De plus, la fabrication de la traverse selon l'invention est simple et rapide.

La traverse selon l'invention peut comprendre l'une ou plusieurs des caractéristiques des revendications 2 à 7, prise(s) isolément ou suivant toute combinaison techniquement possible.

L'invention a également pour objet une caisse de véhicule de transport public, notamment de véhicule ferroviaire, selon la revendication 8.

L'invention a également pour objet un procédé de fabrication selon la revendication 9.

L'invention sera mieux comprise à la lecture de la description qui va suivre, donnée uniquement, à titre d'exemple, et faite en se référant aux dessins annexés, sur lesquels :
- La figure 1 est une vue éclatée d'une partie de traverse selon l'invention, la traverse comprenant un profilé et un embout ;
- La figure 2 est une vue en perspective de l'embout de la figure 1.

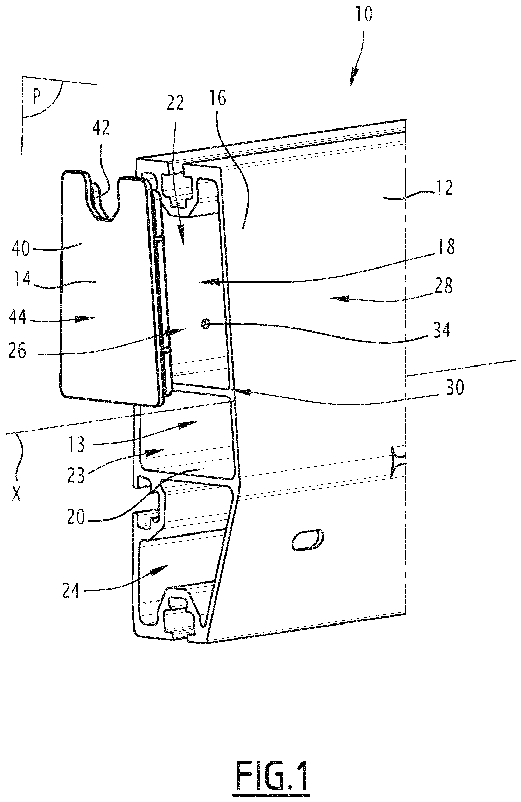

On a représenté, sur la figure 1, un premier mode de réalisation d'une traverse 10 pour caisse de véhicule de transport public. Le véhicule est par exemple un véhicule ferroviaire, notamment un train, un métro ou un tramway. En variante, le véhicule est un bus.

La traverse 10 fait par exemple partie du châssis ou de la caisse du véhicule. La traverse 10 s'étend selon une direction longitudinale, transversale ou d'élévation du véhicule.

La traverse 10 comprend un profilé 12 s'étendant sensiblement selon une direction longitudinale X entre une première ouverture 13 et une deuxième ouverture (non représentée) et au moins un embout 14 de fermeture fixé à l'une de la première ouverture 13 et de la deuxième ouverture du profilé 12. De préférence, la traverse 10 comprend en outre un moyen de fixation de l'embout 14 sur le profilé 12.

Le profilé 12 est de préférence un profilé métallique. Par exemple, le profilé 12 est un profilé en aluminium obtenu par extrusion.

Le profilé 12 présente une longueur comprise entre 0,100 m et 25 m, ladite longueur étant mesurée selon la direction longitudinale X entre la première et la deuxième ouvertures 13.

Le profilé 12 comprend une paroi longitudinale 16 délimitant un alésage 18 traversant entre la première et la deuxième ouvertures 13.

Selon un mode de réalisation particulier, le profilé 12 comprend en outre au moins une paroi de renfort 20 s'étendant sensiblement selon la direction longitudinale à l'intérieur de l'alésage 18 et séparant ledit alésage 18 en une pluralité d'alvéoles 22, 23, 24 de contour fermé. Sur la figure 1, l'alésage 18 est séparé en trois alvéoles 22, 23, 24.

De préférence, chaque alvéole 22, 23, 24 est fermée par un embout 14 respectif (sur la figure 1, seul l'embout 14 bouchant l'alvéole 22 est représenté).

Le profilé 12 présente une surface intérieure 26 orientée vers l'alésage 18, une surface extérieure 28 opposée à la surface intérieure 26 et une tranche 30 affleurant transversalement au niveau de la première et de la deuxième ouvertures 13. En d'autres termes, une tranche 30 forme le bord de la première ouverture 13 et une autre forme le bord de la deuxième ouverture. La surface intérieure 26 est définie par la paroi longitudinale 16 et éventuellement la ou les paroi(s) de renfort 20.

Selon un mode de réalisation particulier, la paroi longitudinale 16 présente au moins un orifice 34, destiné par exemple à recevoir une tige d'un rivet d'assemblage (non représenté), un bourrelet du rivet étant alors reçu dans l'alésage 18.

L'embout 14 est monté sur le profilé 12 au niveau de la première ouverture 13 ou de la deuxième ouverture. Selon un mode de réalisation particulier, la traverse 10 comprend deux fois plus d'embouts 14 que d'alvéoles 22, 23, 24, de sorte que chaque alvéole 22, 23, 24 est fermée en sa première et en sa deuxième ouverture 13 par un embout 14 respectif.

L'embout 14 ferme au moins en partie l'alésage 18 au niveau de la première ouverture 13 ou de la deuxième ouverture. Dans le mode de réalisation de la figure 1, l'embout 14 ferme une alvéole 22 au niveau de la première ouverture 13.

L'embout 14 est par exemple réalisé en un matériau choisi parmi :
- les matériaux plastiques, tels que les polycarbonates, les polyamides et les thermoplastiques,
- les céramiques,
- les poudres métalliques, telles que les poudres d'acier, d'aluminium ou d'inox, et un mélange de ceux-ci.

De préférence, l'embout 14 est réalisé en polycarbonates.

Par exemple, l'embout 14 est fabriqué par fabrication additive. En variante, l'embout 14 est fabriqué par moulage.

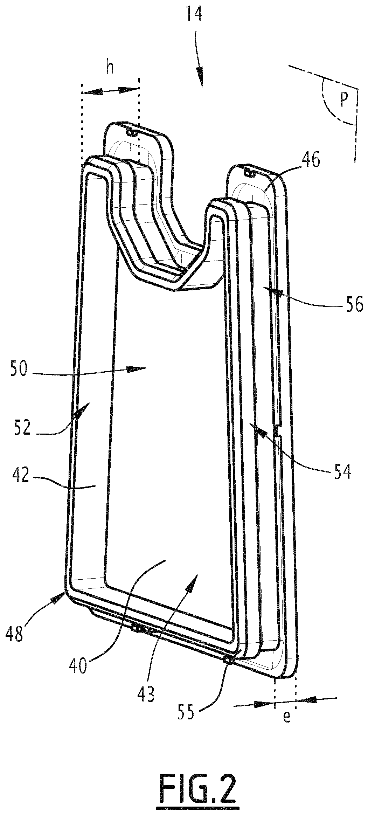

Comme représenté sur les figures 1 et 2, l'embout 14 comprend de préférence une embase 40 s'étendant selon un plan principal P et au moins une jupe 42 faisant saillie par rapport à une première face 43 de l'embase 40.

Lorsque l'embout 14 est monté sur le profilé 12, le plan principal P de l'embout 14 est sensiblement normal à la direction longitudinale X du profilé 12 et la jupe 42 est reçue à l'intérieur de l'alésage 18.

L'embase 40 présente de préférence une épaisseur e inférieure à 10 mm, l'épaisseur e étant mesurée entre la première face 43 de l'embase 40 et une deuxième face 44 de l'embase 40 opposée à la première face 43.

L'embase 40 s'étend au-delà de la jupe 42 selon le plan principal P. L'embase 40 définit ainsi un épaulement 46 externe entourant la jupe 42.

Avantageusement, l'épaulement 46 présente sensiblement la même forme et les mêmes dimensions qu'au moins une partie de la tranche 30 du profilé 12, de sorte que, lorsque l'embout 14 est monté sur le profilé 12, ledit épaulement 46 affleure la surface extérieure 28 du profilé 12. Il est entendu par « affleure » que l'épaulement 46 fait saillie au-delà de la surface extérieure 28 selon le plan principal P sur une distance inférieure à 5 mm.

Dans le mode de réalisation des figures 1 et 2, l'épaulement 46 présente sensiblement la même forme et les mêmes dimensions que la tranche 30 en périphérie de la première alvéole 22.

La jupe 42 s'étend sensiblement perpendiculairement au plan principal P entre l'embase 40 et un bord libre 48 sur une hauteur h comprise entre 10 mm et 20 mm.

La jupe 42 définit une cavité 50 fermé en une extrémité par l'embase 40. La jupe 42 présente une paroi interne 52 orientée vers la cavité 50 et une paroi externe 54 opposée à la paroi interne 52.

De préférence, la jupe 42 présente une forme sensiblement complémentaire à celle de la section de l'alvéole 22, 23, 24 destinée à être fermée par l'embout 14. Lorsque l'embout 14 est monté sur l'alvéole 22, 23, 24, la paroi externe 54 de la jupe 42 est avantageusement au moins en partie en contact étanche avec la surface intérieure 26 du profilé 12. Les frottements de la paroi externe 54 de la jupe 42 avec la surface intérieure 26 participent au maintien de l'embout 14 sur le profilé 12 et à l'étanchéité de la fermeture de l'alvéole.

Avantageusement, le bord libre 48 de la jupe 42 présente un chanfrein 55 réduisant les frottements de la jupe 42 sur la surface intérieure 26 du profilé 12 et facilitant ainsi le montage de l'embout 14 dans le profilé 12.

Avantageusement, la paroi externe 54 de la jupe 42 présente au moins une gorge 56 périphérique s'étendant sensiblement parallèlement au plan principal P de l'embase 40.

Le moyen de fixation, lorsqu'il est présent, améliore le maintien de l'embout 14 sur le profilé 12.

De préférence, le moyen de fixation est un mastic disposé sur au moins une partie de la périphérie de la jupe 42, de préférence sur toute la périphérie de la jupe 42. Le mastic est destiné à adhérer à au moins une partie de la surface interne 26 du profilé 12.

De préférence, le mastic s'étend à l'intérieur d'une gorge 56. Par exemple, chaque gorge 56 est remplie par le mastic.

Le mastic est choisi parmi les élastomères, de préférence les polymères modifiés silane.

Le mastic assure un bon maintien de l'embout 14 sur le profilé 12 et évite qu'il ne se détache, notamment en raison de vibrations lors de la mise en circulation du véhicule.

Avantageusement, l'embout 14 n'est pas soudé sur le profilé 12.

Avantageusement, l'embout 14 est propre à être retiré du profilé 12 au moyen d'un outil, tel qu'une lame tranchante, par exemple de type cutter.

Un procédé de fabrication de la traverse 10 va à présent être décrit.

Le profilé 12 métallique est obtenu, de préférence par extrusion. L'alésage 18 débouche d'une part au niveau de la première ouverture 13 et d'autre part au niveau de la deuxième ouverture.

Le profilé 12 est par exemple fixé à un autre profilé (non représenté) au moyen de rivets traversant chacun un orifice 34 et dont la tête est reçue à l'intérieur de l'alésage 18. Lesdits rivets sont facilement accessibles par un opérateur, le profilé 12 étant initialement ouvert en ses extrémités.

Au moins un embout 14 est fabriqué, par exemple par fabrication additive. En variante, l'embout 14 est fabriqué par moulage.

L'embout 14 est ensuite monté sur le profilé 12 au niveau d'une des ouvertures 13, de manière à fermer au moins en partie l'alésage 18 en ladite première ou deuxième ouverture 13.

De préférence, lorsque le profilé 12 comporte plusieurs alvéoles 22, 23, 24, chaque alvéole 22, 23, 24 est fermé en au moins une ouverture 13 par un embout 14.

De préférence, l'alésage 18 est fermé au niveau de la première ouverture 13 par un ou plusieurs embouts 14 et au niveau de la deuxième ouverture par un ou plusieurs embouts 14.

Dans le mode de réalisation de la figure 1, l'embout 14 est monté sur une alvéole 22 du profilé 12, par insertion de la jupe 42 à l'intérieur de ladite alvéole 22.

L'embout 14 est enfoncé à l'intérieur de l'alvéole 22 jusqu'à ce que l'embase 40 bute sur la tranche 30 en périphérie de l'alvéole 22.

De préférence, un moyen de fixation est utilisé préalablement au montage de l'embout 14 sur le profilé 12.

Par exemple, un mastic est appliqué au moins sur une partie de la périphérie de la jupe 42, de préférence sur toute la périphérie de la jupe 42. Lorsque l'embout 14 est monté sur le profilé 12, le mastic adhère en séchant à la surface interne 26 du profilé 12.

Une fois monté, l'embout 14 empêche l'infiltration d'eau et/ou de déchets végétaux à l'intérieur du profilé 12. La corrosion à l'intérieur du profilé 12 est ainsi réduite par rapport à un profilé dépourvu d'embout.

De plus, lorsque le véhicule est en mouvement, l'embout 14 empêche la pénétration de l'air dans le profilé 12, réduisant ainsi les sifflements inconfortables pour les passagers.

Les embouts 14 garantissent une bonne étanchéité des profilés 12 de la caisse, tout en restant simple et rapide à mettre en oeuvre.

La traverse 10 selon l'invention est ainsi simple et rapide à fabriquer et ne nécessite pas d'étapes de découpe de tôles ou de soudage pour fermer le profilé 12. L'installation de l'embout 14 sur le profilé 12 peut être réalisé en usine de construction ou dans un dépôt de maintenance, sans outillage ou qualifications techniques spécifiques.

En outre, contrairement à un profilé fermé par une tôle soudée, l'embout 14 est facilement retirable au moyen d'un outil. Ainsi, lorsque le profilé 12 est utilisé dans un nouveau contexte ne nécessitant pas sa fermeture, par exemple pour laisser passer des câbles installés à l'intérieur de l'alésage 18, l'embout 14 peut être retiré et éventuellement remonté ultérieurement.

De plus, la forme des embouts 14 est facilement adaptable pour correspondre à différentes formes de profilés 12.

En variante non représentée, la traverse 10 est dépourvue de paroi de renfort et l'alésage 18 définit une unique alvéole. L'embout 14 ferme alors intégralement ledit alésage 18 en la première ou deuxième ouverture 13.

En variante, le mastic est directement appliqué sur la surface interne 26 du profilé 12, à proximité de l'ouverture 13 destinée à être fermée par l'embout 14, ou sur la tranche 30 du profilé 12 autour de l'ouverture 13 destinée à être fermée par l'embout 14.

En variante, selon un deuxième mode de réalisation non représenté, le profilé 12 comprend une pluralité d'alvéoles 22, 23, 24 séparées par des parois de renforts 20 et l'embout 14 comprend une pluralité de jupes 42 faisant saillie par rapport à une même face de l'embase 40. Chaque jupe 42 est destinée à être reçue dans une alvéole 22, 23, 24 respective du profilé 12.

Chaque jupe 42 présente de préférence une forme sensiblement complémentaire à celle de la section de l'alvéole 22, 23, 24 destinée à recevoir ladite jupe 42.

Les jupes 42 sont espacées de manière à définir entre elles une rainure, ladite rainure ayant de préférence une forme sensiblement complémentaire de celle de la paroi de renfort 20 séparant les alvéoles 22, 23, 24 destinées à recevoir lesdites jupes 42.

L'embase 40 prend alors de préférence appui sur l'intégralité de la tranche 30 du profilé 12.

La traverse selon le deuxième mode de réalisation comprend ainsi un unique embout 14 par ouverture 13, l'embout 14 étant apte à boucher simultanément plusieurs alvéoles 22, 23, 24. La fabrication d'une telle traverse nécessite donc un nombre réduit de pièces par rapport à une traverse comprenant plusieurs embouts par ouverture.

## Revendications

1. Traverse (10) pour caisse de véhicule de transport public, notamment de véhicule ferroviaire, comprenant :
- un profilé (12) métallique s'étendant sensiblement selon une direction longitudinale (X) entre une première ouverture (13) et une deuxième ouverture, le profilé (12) comprenant une paroi longitudinale (16) délimitant au moins un alésage (18) traversant entre la première et la deuxième ouvertures (13), l'alésage (18) définissant au moins une alvéole (22, 23, 24) traversante de contour fermé ; et
- au moins un embout (14) de fermeture fixé à l'une de la première et de la deuxième ouvertures (13) du profilé (12), l'embout (14) fermant de façon étanche l'alvéole (22, 23, 24) en ladite première ou deuxième ouvertures (13),
**caractérisée en ce que** l'embout (14) comprend une embase (40) s'étendant selon un plan principal (P) et au moins une jupe (42) faisant saillie par rapport à une face (43) de l'embase (40), la jupe (42) étant reçue à l'intérieur de l'alvéole (22, 23, 24) du profilé (12) lorsque l'embout (14) ferme l'alvéole (22, 23, 24).

2. Traverse (10) selon la revendication 1, dans lequel la jupe (42) s'étend en saillie perpendiculairement à ladite face (43) de l'embase (40), sur une hauteur (h) comprise entre 10 mm et 20 mm.

3. Traverse (10) selon la revendication 1 ou 2, dans lequel l'embase (40) s'étend au-delà de la jupe (42) selon le plan principal (P), de manière à définir un épaulement (46) autour de la jupe (42), le bord de ladite première ou deuxième ouverture (13) prenant appui sur l'épaulement (46) lorsque l'embout (14) ferme l'alvéole (22, 23, 24).

4. Traverse (10) selon l'une quelconque des revendications 1 à 3, dans lequel :
- le profilé (12) comprend une pluralité d'alvéoles (22, 23, 24) traversantes séparées entre elles par des parois de renfort (20), et
- l'embout (14) comprend une pluralité de jupes (42) faisant saillie par rapport à une même face de l'embase (40),
chaque jupe (42) étant reçue à l'intérieur d'une alvéole respective.

5. Traverse (10) selon l'une quelconque des revendications précédentes, dans lequel l'embout (14) est réalisé en un matériau choisi parmi les matériaux plastiques, les céramiques, les poudres métalliques et un mélange de ceux-ci.

6. Traverse (10) selon l'une quelconque des revendications précédentes, dans lequel l'embout (14) est fixé au profilé (12) au moyen d'un mastic.

7. Traverse (10) selon l'une quelconque des revendications précédentes, comprenant un premier embout (14) fixé à la première ouverture (13) du profilé (12) et un deuxième embout (14) fixé à la deuxième ouverture du profilé (12).

8. Caisse de véhicule de transport public, notamment de véhicule ferroviaire, comprenant au moins une traverse (10) selon l'une quelconque des revendications précédentes.

9. Procédé de fabrication d'une traverse (10) selon l'une quelconque des revendications 1 à 7, comprenant les étapes suivantes :
- fourniture du profilé (12), de préférence par extrusion,
- fourniture d'au moins un embout (14) de fermeture, et
- fixation de l'embout (14) à l'une de la première et de la deuxième ouverture (13) du profilé (12) de manière à fermer au moins une alvéole (22, 23, 24) en ladite première ou deuxième ouverture (13),
l'étape de fixation comprenant de préférence une étape d'application d'un mastic sur le profilé (12) et/ou sur l'embout (14).

## Patentansprüche

1. Querträger (10) für Wagenkasten eines Fahrzeugs des öffentlichen Verkehrs, insbesondere eines Schienenfahrzeugs, umfassend:
- ein Metallprofil (12), das sich im Wesentlichen in einer Längsrichtung (X) zwischen einer ersten Öffnung (13) und einer zweiten Öffnung erstreckt, wobei das Profil (12) eine Längswand (16) umfasst, die mindestens eine durchgehende Bohrung (18) zwischen der ersten und der zweiten Öffnung (13) begrenzt, wobei die Bohrung (18) mindestens eine durchgehende Zelle (22, 23, 24) mit geschlossener Kontur definiert; und
- mindestens eine Endkappe (14), die an einer von der ersten und der zweiten Öffnung (13) des Profils (12) befestigt ist, wobei die Kappe (14) die Zelle (22, 23, 24) an der ersten oder der zweiten Öffnung (13) abdichtend verschließt,
**dadurch gekennzeichnet, dass** die Endkappe (14) einen Sockel (40), die sich entlang einer Hauptebene (P) erstreckt, und mindestens eine Schürze (42), die in Bezug auf eine Seite (43) des Sockels (40) hervorsteht, umfasst, wobei die Schürze (42) im Inneren der Zelle (22, 23, 24) des Profils (12) aufgenommen wird, wenn die Kappe (14) die Zelle (22, 23, 24) verschließt.

2. Querträger (10) nach Anspruch 1, wobei sich die Schürze (42) über eine Höhe (h) zwischen 10 mm und 20 mm senkrecht zu der genannten Fläche (43) des Sockels (40) hervorstehend erstreckt.

3. Querträger (10) nach Anspruch 1 oder 2, wobei sich der Sockel (40) entlang der Hauptebene (P) über die Schürze (42) hinaus erstreckt, um eine Schulter (46) um die Schürze (42) zu definieren, wobei der Rand der ersten oder der zweiten Öffnung (13) an der Schulter (46) anliegt, wenn die Kappe (14) die Zelle (22, 23, 24) verschließt.

4. Querträger (10) nach einem der Ansprüche 1 bis 3, wobei:
- das Profil (12) eine Vielzahl von durchgehenden Zellen (22, 23, 24) umfasst, die durch Verstärkungswände (20) voneinander getrennt sind, und
- die Kappe (14) eine Vielzahl von Schürzen (42) umfasst, die von einer gleichen Seite des Sockels (40) hervorstehen,
wobei jede Schürze (42) innerhalb einer jeweiligen Zelle aufgenommen wird.

5. Querträger (10) nach einem der vorherigen Ansprüche, wobei die Kappe (14) aus einem Material gefertigt ist, das ausgewählt ist aus Kunststoffen, Keramiken, Metallpulvern und einem Gemisch davon.

6. Querträger (10) nach einem der vorherigen Ansprüche, wobei die Kappe (14) mittels Kitt an dem Profil (12) befestigt ist.

7. Querträger (10) nach einem der vorherigen Ansprüche, umfassend eine erste Kappe (14), die an der ersten Öffnung (13) des Profils (12) befestigt ist, und eine zweite Kappe (14), die an der zweiten Öffnung des Profils (12) befestigt ist.

8. Wagenkasten eines Fahrzeugs des öffentlichen Verkehrs, insbesondere eines Schienenfahrzeugs, umfassend mindestens einen Querträger (10) nach einem der vorherigen Ansprüche.

9. Verfahren zur Herstellung eines Querträgers (10) nach einem der Ansprüche 1 bis 7, umfassend die folgenden Schritte:
- Bereitstellen des Profils (12), vorzugsweise durch Extrusion,
- Bereitstellen von mindestens einer Endkappe (14), und
- Befestigen der Kappe (14) an einer von der ersten und der zweiten Öffnung (13) des Profils (12), um mindestens eine Zelle (22, 23, 24) in der ersten oder zweiten Öffnung (13) zu verschließen,
wobei der Befestigungsschritt vorzugsweise einen Schritt eines Auftragens eines Kitts auf das Profil (12) und/oder die Kappe (14) umfasst.

## Claims

1. Cross member (10) for the body of a public transport vehicle, in particular a railway vehicle, comprising:
- a metal section (12) extending substantially in a longitudinal direction (X) between a first opening (13) and a second opening, the section (12) comprising a longitudinal wall (16) defining at least one bore (18) passing through between the first and second openings (13), the bore (18) defining at least one through cell (22, 23, 24) of closed contour; and
- at least one closure cap (14) attached to one of the first and second openings (13) of the profile (12), the cap (14) sealing the cell (22, 23, 24) at said first or second opening (13),
**characterised in that** the end piece (14) comprises a base (40) extending in a main plane (P) and at least one skirt (42) projecting with respect to face (43) of the base (40), the skirt (42) being received inside the cell (22, 23, 24) of the profile (12) when the end cap (14) closes the cell (22, 23, 24).

2. Cross member (10) according to claim 1, wherein the skirt (42) extends perpendicularly to said face (43) of the base (40), over a height (h) of between 10 mm and 20 mm.

3. Cross member (10) according to claim 1 or 2, wherein the base (40) extends beyond the skirt (42) in the main plane (P) so as to define a shoulder (46) around the skirt (42), the edge of said first or second opening (13) bearing on the shoulder (46) when the end cap (14) closes the cell (22, 23, 24).

4. Cross member (10) according to any of claims 1 to 3, wherein:
- the profile (12) comprises a plurality of through cells (22, 23, 24) separated from each other by reinforcing walls (20), and
- the end cap (14) comprises a plurality of skirts (42) projecting from a common face of the base (40),
each skirt (42) being received within a respective cell.

5. Cross member (10) according to any of the preceding claims, wherein the end cap (14) is made of a material selected from plastic materials, ceramics, powdered metals and a mixture thereof.

6. Cross member (10) according to any of the preceding claims, wherein the end cap (14) is fixed to the profile (12) by means of a sealant.

7. Cross member (10) according to any of the preceding claims, comprising a first end piece (14) attached to the first opening (13) of the profile (12) and a second end piece (14) attached to the second opening of the profile (12).

8. A body for a public transport vehicle, in particular a railway vehicle, comprising at least one cross member (10) according to any of the preceding claims.

9. A method of mounting the assembly (10) according to any of claims 1 to 7, comprising the following steps:
- supply of the profile (12), preferably by extrusion,
- the provision of at least one end cap (14), and
- attachment of the end cap (14) to one of the first and second openings (13) of the profile (12) so as to close at least one cell (22, 23, 24) at said first or second opening (13),
the fixing step preferably comprising a step of applying a sealant to the profile (12) and/or to the end cap (14).
